# EUROPEAN PATENT SPECIFICATION

(11) **EP 3 368 356 B1**
(45) Date of publication and mention of the grant of the patent: **11.09.2019**
(21) Application number: 16809210.4
(22) Date of filing: 24.10.2016
(51) Int. Cl.: B60H 1/32, B60H 3/02

(54) **A CABIN COOLING SYSTEM WITH AN AIR DRYING MEMBRANE**
KABINENKÜHLSYSTEM MIT EINER LUFTTROCKNUNGSMEMBRAN
SYSTÈME DE REFROIDISSEMENT DE CABINE AVEC MEMBRANE DE SÉCHAGE D'AIR

(30) Priority: 27.10.2015 TR 201513402
(43) Date of publication of application: 05.09.2018
(73) Proprietor: Tofas Turk Otomobil Fabrikasi Anonim Sirketi, 16369 Bursa (TR)
(72) Inventor: AYARTURK, Hasan, 16369 Bursa (TR)
(74) Representative: Dericioglu Kurt, Ekin
(86) International application number: PCT/TR2016/050399
(87) International publication number: WO 2017/074286

(56) References cited:
- US-A- 5 435 150
- US-A1- 2008 156 465

## Description

### Field of the Invention

The present invention relates to a cabin cooling system with an air drying membrane wherein the relative humidity is decreased without temperature increase with air drying membrane in vehicle air conditioning systems, and thus the energy consumption, HVAC assembly and installation dimensions, weight, and therefore the costs are reduced.

### Background of the Invention

Today, in generally used vehicle cabin cooling systems, more than half of the energy consumed for cooling is used for condensing the humidity in the air. This situation increases the energy consumption of the vehicle air conditioning system, thereby increasing the dimensions, weight and cost of the HVAC assembly and installation.

In the vehicle HVAC systems known in the state of the art, the coolant in vapor phase is pressurized by the compressor, and the heat of the fluid with increased temperature is discharged to outer environment by the condenser, and it is liquidized. The liquid is expanded by the expansion valve and its temperature is reduced, and the heat of the cabin is drawn and discharged to outer environment.

In desiccant air drying systems which is another vehicle cabin cooling system known in the state of the art, the air is passed through a drying rotor and the humidity amount in a constant enthalpy is decreased, and thus its temperature rises. In the meantime, the regeneration air is passed through some part of the drying rotor as hot air after it is heated, and its temperature is decreased in fixed enthalpy by some amount of water vaporizing therein due to high temperature. The hot and humid air discharged to the outer environment, dry and hot air is passed through a water serpentine and its temperature is brought to comfort level and then it is given inside the cabin. A drying rotor through which air can pass is comprised of a rotor rotating with belt and pulley method, two fans for enabling dried air and regeneration air flows, and a regeneration air heater. Since this system is quite complex, heavy and costly, it is not suitable to be used in vehicles, and it is not used in vehicles.

United States Patent Document no US5512083A, an application known in the state of the art, discloses a system which blows humid air by taking dry and hot air. In the said invention, desiccant rotor and defroster is used, and thus the dry air in the vehicle cabin is enabled to be blown into the vehicle cabin by humidifying the dry air. In the system disclosed in the said document, a rotor system having large dimension and requiring additional drive mechanism, and a movable part for rotating the rotor are required. However, our invention does not require any movable part for drying the air, air is dried by passing through the membrane. United States Patent Document no US6205805B1, an application known in the state of the art, discloses a cooling system which enables to increase the relative humidity first by cooling the air, and then enables to cool more efficiently with a dryer. In the system disclosed in United States Patent Document no US6205805B1, in the disclosed system, the temperature of the air also increases while drying in a dryer, and the need for pre-cooling emerges in case evaporative cooling is applied. In the system disclosed in United States Patent Document no US6205805B1, it is required to use two fans, heater and cooling serpentines. In our invention, cooling is realized by using air pressure, it does not require any heater or cooler serpentine, and installation components of these serpentines (compressor, condenser, TXV, etc.).

Other examples are disclosed in US2008/0156465 and US5435150.

### Summary of the Invention

The objective of the present invention is to provide a cabin cooling with an air drying membrane according to claim 1 in which passive cooling requirement and members required for passive cooling are eliminated by drying the air via a membrane in the vehicle air conditioning system. Since temperature does not increase while the air is being dried via a membrane, temperature increase problem due to heat occurring as a result of the condensation of the humidity in the air is eliminated, thus the requirement for passive cooling is also eliminated. As a result of being able to dry the air in this degree without increasing the temperature of the air, evaporative cooling can be applied, and the air temperature can be cooled up to the comfort of an air conditioner.

Another objective of the present invention is to provide a cabin cooling with an air drying membrane wherein the energy consumed for pressurization process is regained, air dew temperature is dried up to -60 °C with membrane technology operating under high pressure difference.

A further objective of the present invention is to provide a cabin cooling with an air drying membrane which eliminates the use of extra water and storage requirements by using water condensed from the air in evaporative cooling and in various requirements in vehicle in the system.

Yet another objective of the present invention is to provide a cabin cooling with an air drying membrane which does not require a large, complex rotor system requiring additional drive mechanism for drying the air, which does not require any movable part for drying the air.

### Detailed Description of the Invention

"A cabin cooling system with an air drying membrane" developed to fulfill the objective of the present invention is illustrated in the accompanying figures wherein,

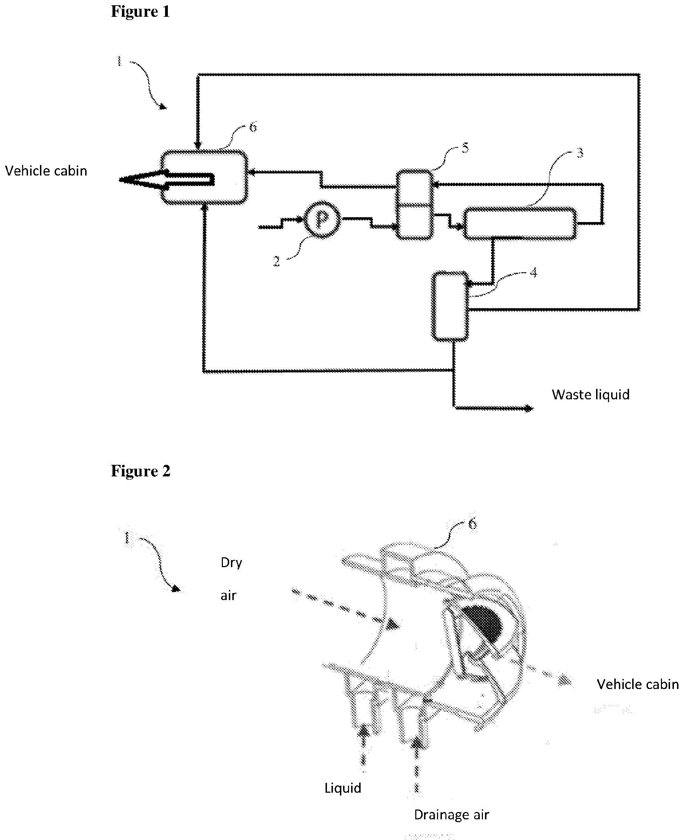

Figure 1 is the view of an inventive cabin cooling system with air drying membrane, pneumatic pulverizator for the vehicles.
Figure 2 is the detailed view of the air blower which performs pneumatic pulverization.

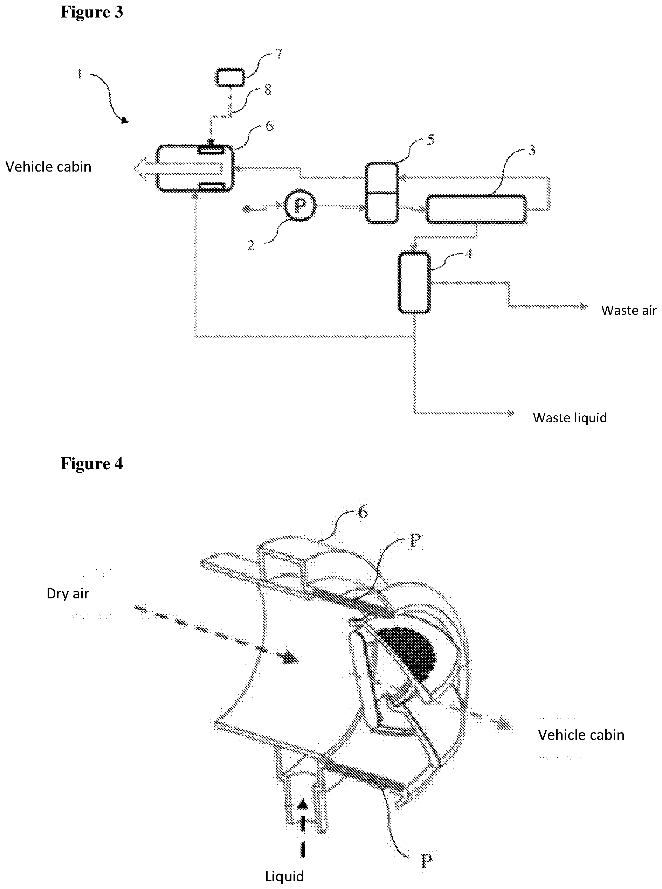

Figure 3 is the view of an inventive cabin cooling system with air drying membrane, ultrasonic pulverizator for the vehicles.
Figure 4 is the detailed view of the air blower which performs ultrasonic pulverization.

The components given in the figures are individually numbered where the numbers refer to the following.
1. Cabin cooling system with air drying membrane
2. Air pump
3. Membrane
4. Liquid separator
5. Air pressure booster
6. Air blower
7. Power supply
8. Electric installation
P. Piezoelectric crystal

A cabin cooling with an air drying membrane, in which passive cooling requirement and members required for passive cooling are eliminated by drying the air via a membrane in the vehicle air conditioning system and which is simple and cheap, essentially comprises
- At least one air pump (2) which enables the inlet air comprised of medium air, outside air or their mixture in certain ratios to reach a predetermined pressure value, and which enables the circulation of air in the system,
- At least one membrane (3) which dries the high pressure air by removing the relative humidity therein without temperature increase,
- At least one liquid separator (4) which enables the liquid to be separated from the over-saturated air exiting the membrane (3), the separated liquid to be stored for use in the vehicle and the system,
- At least one air pressure booster (5) which transfers the air exiting the air pump (2) to the membrane (3) by pressurizing it, and which reduces the pressure and temperature values by expanding the dry air exiting the membrane,
- At least one air blower (6) in which the dry air coming from the membrane (3) and exiting the air pressure control member (5) is humidified with the water coming from the liquid separator (4), and transferred inside the cabin.

In vehicle cabin cooling systems, more than half of the cooling power is used for the hidden heat, in other words for condensing the humidity in the air. This situation also increases the energy consumption of the vehicle air conditioning system, thereby increasing the dimensions, weight and cost of the HVAC assembly and installation. In the inventive cabin cooling system with an air drying membrane (1), the relative humidity of the air received into the system is reduced with the air drying membrane (3) without temperature increase, and the air is enabled to be cooled by spraying the water condensed from the water into the air again.

In our invention, since the temperature does not increase while the air is being dried via the membrane (3), the temperature increase problem of the air is eliminated, thereby eliminating the passive cooling requirement, and the use of components for performing passive cooling such as serpentine, fan, electric motor is not required.

According to the invention, the air drying membrane (3) can be an air drying membrane which can operate with minimum 3 bar pressure difference with the ambient pressure. Pressurizing the membrane (3) inlet air, reducing the dried air to the ambient pressure again due to pressure loss in the membrane (3) being small is enabled via the air pressure booster (3), and the pressure decrease, except the losses, are regained. An air pump (2) is provided for the losses. In this way, the air is also cooled as well as the energy consumed for condensing the humidity in the air is reduced.

With the membrane (3) disclosed in the invention operating under high pressure difference, the air dew temperature can be dried to levels of -60°C. As a result of being able to dry the air to maximum -60°C without increasing the temperature of the air, evaporative cooling can be applied, and the air temperature can be cooled up to the comfort of an air conditioner.

The main objective of the invention is to dry the air without increasing the temperature and therefore to provide energy saving. In the inventive cabin cooling system with air drying membrane (1), cooling and/or not cooling the air before entering into the membrane (3) does not have importance in terms of cooling efficiency.

In the inventive cabin cooling system with air drying membrane (1), when inlet air comprised of ambient air, outside air or their mixture in a certain ratio enters into the system, the air pump (2) is reached to a predetermined pressure value in order to prevent pressure loss. The inlet air the pressure loss of which is prevented via the pump (2) is transferred to the air pressure booster (5), and it is pressurized up to membrane (3) operating conditions in there. The air pressurized in the air pressure booster (5) is transferred to the membrane (3). The air transferred to the membrane (3) is dried and then it is transferred to the air pressure booster (5) again. The dry air coming from the membrane (3) is expanded in the air pressure booster (5) and its temperature is reduced. The waste heat and pressure generated as a result of this process is used in the system again. Since the waste pressure obtained by expanding the air meets large part of the power required to pressurize the air, it reduces the amount of energy consumed for pressurizing the air.

The air the temperature and pressure of which is reduced and which is expanded in the air pressure booster (5) is transferred to the air blower (6). The dry air transferred to the air blower (6) is cooled to a desired temperature with evaporative cooling method, and it is humidified by diffusing liquid therein. The cooled and humidified air is blown into the cabin via the air blower (6).

The air is separated from its relative humidity at constant temperature in the membrane (3), and the air is dried. The drainage air in middle pressure exiting the membrane (3) is transferred to the liquid separator (4), and in here the air is separated from the liquid. The separated air and water is used in the system.

A predetermined amount of liquid separated from the air in the liquid separator (4) is transferred to the air blower (6). The liquid transferred to the air blower (6) is used in humidifying and cooling dried air. Evaporative cooling process is realized in the air blower (6) with the liquid transferred from the liquid separator (4). Since the liquid used in the cooling process is obtained from condensing the air in the system, the need for storing extra liquid in the vehicle is eliminated. In a preferred embodiment of the invention, the said liquid is water.

In order to humidify the dry air in the air blower (6), the liquid is pulverized in the dry air. In the pulverization process of the liquid required to be evaporative cooled into the air, the said liquid is sprayed through the wall of the air blower (6) into the dry air. The drainage air with medium pressure exiting the membrane (3) and separated from the liquid therein in the liquid separator (4) is used in spraying process. A vacuum is generated with the pressure occurring in spraying process, the vacuum enables the liquid to be pulverized into the dry air. Upon using waste air pressure present in the system in pulverization process, the use of the high pressure pump and various pulverization systems are eliminated. The said pulverization method can also be called as pneumatic pulverization.

In another embodiment of the invention, the drainage air going out of the membrane (3) with medium pressure is not directly transferred to the air blower (6), it is carried within the liquid going out of the liquid separator (4), and thus transferred to the air blower (6). The transferred liquid is pulverized with the piezoelectric crystals (P) in the water. The piezoelectric crystals (P) are fed with a power supply (7) and electric installation (8) providing the electric communication with the power supply (7). The liquid transferred to the air blower (6) for humidifying the dry air is sprayed from the blower (6) wall through the piezoelectric crystals (P), and the liquid is atomized by the piezoelectric crystals (P) and diffused into the dry air. The said pulverization method can also be called as ultrasonic pulverization.

In one embodiment of the invention, since all of the water condensed from the air is not used for evaporative cooling process, extra liquid may remain in the liquid separator (4). The remaining liquid can meet liquid requirement in the vehicle such as wiper water, engine cooling water, therefore the problem of completing the lacking water in the current vehicles is solved in this way.

## Claims

1. A cabin cooling system (1) with an air drying membrane (3), wherein the inlet air is dried in vehicle air conditioner and the water generated during drying process is used for cooling process, wherein the system (1) comprises :
- at least one air pump (2) which enables the inlet air comprised of medium air, outside air or their mixture in certain ratios to reach a predetermined pressure value, and which enables the circulation of air in the system (1),
- at least one membrane (3) which enables to reduce the relative humidity of the air taken inside the system without increasing the air temperature, and which can operate with minimum 3 bar of pressure difference with the ambient pressure,
- at least one liquid separator (4) which enables the liquid to be separated from the over-saturated air exiting the membrane (3), the separated liquid to be stored for use in the vehicle and in the system (1), and **characterised by**,
- at least one air pressure booster (5) which transfers the air exiting the air pump (2) to the membrane (3) by pressurizing it, and which reduces the pressure and temperature values by expanding the dry air exiting the membrane (3),
- at least one air blower (6) in which the dry air coming from the membrane (3) and exiting the air pressure control member (5) is: humidified with the water coming from the liquid separator (4) by means of pulverization method, and transferred inside the cabin.

2. A cabin cooling system (1) with an air drying membrane (3) according to claim 1, **characterized in that** the air is dried up to maximum -60°C dew temperature value by the membrane (3).

3. A cabin cooling system (1) with an air drying membrane (3) according to claim 1, **characterized in that** the system inlet air is cooled and/or not cooled before being dried in the membrane (3) without affecting the drying efficiency of the membrane (3).

4. A cabin cooling system (1) with an air drying membrane (3) according to claim 1, **characterized in that** the liquid separated from the air going out of the membrane (3) into the liquid separator (4) is used for cooling and humidifying processes in the air blower (6).

5. A cabin cooling system (1) with an air drying membrane (3) according to claim 1, **characterized in that** the dry air going out of the membrane (3) is cooled with evaporative cooling method and humidified with pulverization method in the air blower (6).

6. A cabin cooling system (1) with an air drying membrane (3) according to claim 1, **characterized in that** the air blower (6) has a wall and the liquid coming to the air blower (6) wall from the liquid separator (4) is sprayed with the air going out of the separator (4), vacuum is generated with spraying and the liquid is pulverized into the dry air.

7. A cabin cooling system (1) with an air drying membrane (3) according to claim 1, **characterized in that** the pulverization process is realized with piezoelectric crystals (P) carried in the liquid going out of the liquid separator (4), the piezoelectric crystals (P) are fed with a power supply (7) and an electric installation (8) providing electric communication with the power supply (7).

## Patentansprüche

1. Kabinen-Kühlsystem (1) mit einer Lufttrocknungsmembran (3), wobei die Einlassluft in einer Fahrzeugklimaanlage getrocknet wird und das während des Trocknungsprozesses erzeugte Wasser zum Kühlprozess verwendet wird, wobei das System (1) umfasst:
- mindestens eine Luftpumpe (2), die es ermöglicht, dass die aus Mediumsluft, Außenluft oder deren Gemisch in bestimmten Verhältnissen bestehende Zuluft einen vorgegebenen Druckwert erreicht, und die die Zirkulation von Luft in dem System (1) ermöglicht,
- mindestens eine Membran (3), die es ermöglicht, die relative Luftfeuchtigkeit der in das System aufgenommenen Luft zu reduzieren, ohne die Lufttemperatur zu erhöhen, und die mit mindestens 3 bar Druckdifferenz mit dem Umgebungsdruck arbeiten kann,
- mindestens einen Flüssigkeitstrenner (4), der es ermöglicht, die Flüssigkeit von der aus der Membran (3) austretenden übersättigten Luft zu trennen, wobei die abgetrennte Flüssigkeit zur Verwendung im Fahrzeug und im System (1) gespeichert werden kann, **gekennzeichnet durch**,
- mindestens einen Luftdruckverstärker (5), der die aus der Luftpumpe (2) austretende Luft durch Druckbeaufschlagung auf die Membran (3) überträgt und der die Druck- und Temperaturwerte durch Ausdehnung der aus der Membran (3) austretenden Trockenluft reduziert,
- mindestens ein Luftgebläse (6), in dem die von der Membran (3) kommende und aus dem Luftdrucksteuerelement (5) austretende trockene Luft mit dem aus dem Flüssigkeitstrenner (4) kommenden Wasser mittels Pulverisierverfahren befeuchtet und innerhalb der Kabine übertragen wird.

2. Kabinen-Kühlsystem (1) mit einer Lufttrocknungsmembran (3) nach Anspruch 1, **dadurch gekennzeichnet, dass** die Luft durch die Membran (3) auf einen maximalen Taupunkttemperatur von -60°C getrocknet wird.

3. Kabinen-Kühlsystem (1) mit einer Lufttrocknungsmembran (3) nach Anspruch 1, **dadurch gekennzeichnet, dass** die Systemeingangsluft vor dem Trocknen in der Membran (3) gekühlt und/oder nicht gekühlt wird, ohne die Trocknungsleistung der Membran (3) zu beeinträchtigen.

4. Kabinen-Kühlsystem (1) mit einer Lufttrocknungsmembran (3) nach Anspruch 1, **dadurch gekennzeichnet, dass** die von der aus der Membran (3) in den Flüssigkeitstrenner (4) austretenden Luft getrennte Flüssigkeit für Kühl- und Befeuchtungsprozesse im Luftgebläse (6) verwendet wird.

5. Kabinen-Kühlsystem (1) mit einer Lufttrocknungsmembran (3) nach Anspruch 1, **dadurch gekennzeichnet, dass** die aus der Membran (3) austretende trockene Luft mit dem Verdunstungskühlverfahren gekühlt und mit dem Pulverisierungsverfahren im Luftgebläse (6) befeuchtet wird.

6. Kabinen-Kühlsystem (1) mit einer Lufttrocknungsmembran (3) nach Anspruch 1, **dadurch gekennzeichnet, dass** das Luftgebläse (6) eine Wand aufweist und die aus dem Flüssigkeitstrenner (4) in die Wand des Luftgebläses (6) einströmende Flüssigkeit mit der aus dem Trenner (4) austretenden Luft besprüht wird, Vakuum durch Sprühen erzeugt wird und die Flüssigkeit in die trockene Luft pulverisiert wird.

7. Kabinen-Kühlsystem (1) mit einer Lufttrocknungsmembran (3) nach Anspruch 1, **dadurch gekennzeichnet, dass** der Pulverisierungsprozess mit piezoelektrischen Kristallen (P) realisiert ist, die in der aus dem Flüssigkeitstrenner (4) austretenden Flüssigkeit durchgeführt werden, die piezoelektrischen Kristalle (P) mit einer Stromversorgung (7) und einer elektrischen Anlage (8) gespeist werden, die eine elektrische Verbindung mit der Stromversorgung (7) herstellt.

## Revendications

1. Système de refroidissement de cabine (1) avec une membrane de séchage à l'air (3), dans lequel l'air d'entrée est séché dans un climatiseur de véhicule et l'eau produite pendant le processus de séchage est utilisée pour le processus de refroidissement, dans lequel le système (1) comprend :
- au moins une pompe à air (2) qui permet à l'air d'entrée constitué d'air ambiant, d'air extérieur ou de leur mélange dans certains rapports pour atteindre une valeur de pression prédéterminée, et qui permet la circulation de l'air dans le système (1),
- au moins une membrane (3) qui permet de réduire l'humidité relative de l'air pris à l'intérieur du système sans augmenter la température de l'air, et qui peut fonctionner avec une différence de pression minimale de 3 bar par rapport à la pression ambiante,
- au moins un séparateur de liquide (4) qui permet de séparer le liquide de l'air sursaturé sortant de la membrane (3), le liquide séparé devant être stocké pour être utilisé dans le véhicule et dans le système (1), et **caractérisée par**
- au moins un surpresseur d'air (5) qui transfère l'air sortant de la pompe à air (2) vers la membrane (3) en la mettant sous pression, et qui réduit les valeurs de pression et de température en dilatant l'air sec sortant de la membrane (3),
- au moins une soufflerie d'air (6) dans laquelle l'air sec provenant de la membrane (3) et sortant de l'organe de commande de pression d'air (5) est humidifié avec l'eau provenant du séparateur de liquide (4) au moyen d'un procédé de pulvérisation, et transféré dans la cabine.

2. Système de refroidissement de cabine (1) avec une membrane de séchage à l'air (3) selon la revendication 1, **caractérisé en ce que** l'air est séché jusqu'à une température de rosée maximale de -60°C par la membrane (3).

3. Système de refroidissement de cabine (1) avec une membrane de séchage à l'air (3) selon la revendication 1, **caractérisé en ce que** l'air d'entrée du système est refroidi et/ou non refroidi avant d'être séché dans la membrane (3) sans affecter l'efficacité de séchage de la membrane (3).

4. Système de refroidissement de cabine (1) avec une membrane de séchage à l'air (3) selon la revendication 1, **caractérisé en ce que** le liquide séparé de l'air sortant de la membrane (3) vers le séparateur de liquide (4) est utilisé pour des processus de refroidissement et d'humidification dans la soufflerie d'air (6).

5. Système de refroidissement de cabine (1) avec une membrane de séchage à l'air (3) selon la revendication 1, **caractérisé en ce que** l'air sec sortant de la membrane (3) est refroidi par refroidissement évaporatif et humidifié par pulvérisation dans la soufflerie d'air (6).

6. Système de refroidissement de cabine (1) avec une membrane de séchage à l'air (3) selon la revendication 1, **caractérisé en ce que** la soufflerie d'air (6) présente une paroi et le liquide provenant du séparateur de liquide (4) qui arrive à la paroi de la soufflerie d'air (6) est pulvérisé avec l'air sortant du séparateur (4), le vide est généré par pulvérisation et le liquide est pulvérisé dans l'air sec.

7. Système de refroidissement de cabine (1) avec une membrane de séchage à l'air (3) selon la revendication 1, **caractérisé en ce que** le processus de pulvérisation est réalisé avec des cristaux piézoélectriques (P) transportés dans le liquide sortant du séparateur de liquide (4), les cristaux piézoélectriques (P) sont alimentés par une alimentation électrique (7) et une installation électrique (8) assurant une communication électrique avec l'alimentation électrique (7).
